# EUROPÄISCHE PATENTSCHRIFT

(11) **EP 0 590 330 B1**
(45) Veröffentlichungstag und Bekanntmachung des Hinweises auf die Patenterteilung: **07.04.1999**
(21) Anmeldenummer: 93113967.9
(22) Anmeldetag: 01.09.1993
(51) Int. Cl.: E05B 17/04, B60R 25/02

(54) **Schliesszylinder**
Lock cylinder
Cylindre de serrure

(30) Priorität: 01.10.1992 DE 4233029
(43) Veröffentlichungstag der Anmeldung: 06.04.1994
(73) Patentinhaber: Valeo Deutschland GmbH & Co. Sicherheitssysteme, 85253 Erdweg (DE)
(72) Erfinder: Weber, Günter, D-42113 Wuppertal (DE); Pieper, Friedrich, D-84513 Töging/Inn (DE)
(74) Vertreter: COHAUSZ HANNIG DAWIDOWICZ & PARTNER

(56) Entgegenhaltungen:
- EP-A- 0 212 468
- EP-A- 0 341 132
- AU-B- 851 225
- DE-A- 2 605 589
- DE-A- 2 644 000
- US-A- 1 582 425
- US-A- 2 049 742
- US-A- 2 086 034

## Beschreibung

Die Erfindung betrifft einen Schließzylinder, insbesondere eines Kfz-Schlosses mit einem Zylinderkern mit Schlüsselkanal und Zuhaltungen, die bei falschem Schlüssel in dem Zylindergehäuse, das der Zylinderkern umgibt, sperrend einliegen und das Zylindergehäuse ein Rast überwindend mitdrehen, und die bei richtigem Schlüssel den Zylinderkern frei gegenüber dem Zylindergehäuse drehen lassen, wobei durch die freie Drehung des Zylinderkerns gegenüber dem Zylindergehäuse der Zylinderkern ein Kuppelelement mitnimmt, das auf einer Schrägfläche des Zylindergehäuses aufläuft und damit eine Bewegung ausführt, die das Kuppelelement an ein Übertragungsteil ankuppeln läßt, das eine Schließfunktion direkt und indirekt ausführt.

Ein solcher Schließzylinder ist aus der EP-A-0 341 132 bekannt. Bei diesem bekannten Schließzylinder ist das Kuppelelement koaxial und damit mittig gelagert, wodurch in axialer Richtung das Schloß eine verhältnismäßig große Bauhöhe erhält. Ferner ist ein ähnlicher Stand der Technik mit koaxialer Lagerung des Kuppelelementes aus der EP-A-0 212 468 bekannt.

Aufgabe der Erfindung ist es, einen Schließzylinder der eingangs genannten Art so zu verbessern, daß bei einfacher Konstruktion und Handhabung als auch bei großer Zuverlässigkeit geringe Außenabmessungen und Gewicht bestehen.

Diese Aufgabe wird erfindungsgemäß dadurch gelöst, daß das Kuppelelement am Zylinderkern außermittig gelagert ist und am Kuppelelement ein Federelement anliegt, das das Kuppelelement gegen seine Kuppelbewegung beaufschlagt.

Bei einem solchen Schloß ist das Kuppelelement aufgrund seiner außermittigen Lagerung platzsparend unterzubringen, wobei die Funktionstüchtigkeit nicht verringert ist.

Besonders vorteilhaft ist es, wenn das Kuppelelement ein achsparalleler Stift ist, der axial bewegbar ist. Alternativ kann das Kuppelelement ein Schwenkteil sein, das um eine zum Zylinderkern tangentiale oder zur Tangente parallele Achse beweglich ist. Auch ist von Vorteil, wenn das Schwenkteil etwa kreissegmentförmig ist und zum Ankuppeln sich seine Seitenkante zur Schließachse hin bewegt.

In einer alternativen vorteilhaften Ausführung wird vorgeschlagen, daß das Kuppelelement im Zylinder radial beweglich gelagert ist. Hierbei kann das Kuppelelement mit einem äußeren Vorsprung auf einer seitlichen kurzen Umfangsbahn laufen.

Besonders vorteilhaft ist es, wenn die Schrägfläche des Zylindergehäuses nur in der Schließdrehrichtung angeordnet ist und in entgegengesetzter Drehrichtung des Zylinderkerns das Kuppelelement gegen eine Sperrfläche anliegt.

Von größerer Bedeutung ist es, daß im Steuernocken eine Sicherungsplatte querbeweglich ist, die den Steuernocken diebstahlsicher am Zylinderkern befestigt. Ausführungsbeispiele der Erfindung sind in den Zeichnungen dargestellt und werden im folgenden näher beschrieben. Es zeigen:
- Fig. 1: Einen axialen Schnitt durch ein Kraftfahrzeuglenkradschloß mit erfindungsgemäßem Schließzylinder,
- Fig. 2: einen Querschnitt durch das Schloß,
- Fig. 3: einen Schnitt nach III-III in Fig. 2,
- Fig. 4: einen axialen Schnitt durch das Ausführungsbeispiel.

Das Lenkschloß weist ein abgestuft zylindrisches Schloßgehäuse 1 auf, in dem koaxial ein Zylindergehäuse 2 gelagert ist, das aus einem inneren Zylindergehäuse 2a und einem äußeren Zylindergehäuse 2b besteht, die koaxial ineinander gesteckt sind.

Das innere Zylindergehäuse 2a weist radiale Ausnehmungen 2c auf, in die die plättchenförmigen Zahaltungen 3 teilweise hineinragen, wenn ein falscher Schlüssel eingesteckt ist.

Die Zuhaltungen 3 sind in quer angeordneten Ausnehmungen eines Zylinderkerns 4 radial verschieblich angeordnet. Der Zylinderkern 4 ist koaxial im Zylindergehäuse 2 verdrehbar gelagert und besitzt einen Längskanal für den Schlüssel 6.

Das an sich bekannte Funktionsprinzip dieses Schließzylinders besteht darin, daß bei eingestecktem falschem Schlüssel die Zuhaltungen 3 das Zylindergehäuse mit dem Zylinderkern drehfest verbinden, so daß bei Drehen des Schlüssels 6 sowohl der Zylinderkern 4 als auch das Zylindergehäuse 2 verdreht werden. Hierbei überwindet das Zylindergehäuse eine Rast sperre und Zylinderkern und Zylindergehäuse sind frei verdrehbar durch einen falschen Schlüssel oder ein eingestecktes Einbruchswerkzeug.

Ist dagegen ein richtiger Schlüssel eingesteckt, so wird durch den Schlüssel der Zylinderkern 4 verdreht, aber nicht das Zylindergehäuse, da es durch die Rastsperre gehalten ist. In diesem Fall erzeugt die Relativbewegung des Zylinderkerns gegenüber dem Zylindergehäuse eine Bewegung eines Kuppelelementes, das den Zylinderkern mit einem weiteren Teil (Übertragungsteil 7) verbindet, das auf der Schlüsseleinführungsseite abgewandten Ende des Zylinderkerns angeordnet ist. Es kommt damit zu einem Kuppeln des Zylinderkerns 4 mit einem Übertragungsteil 7.

Im folgenden werden unterschiedliche Konstruktionsarten des Kuppeln des Zylinderkerns 4 mit dem Übertragungsteil 7 beschrieben, wenn der Zylinderkern 4 relativ gegenüber dem Zylindergehäuse 2 bewegt wird:

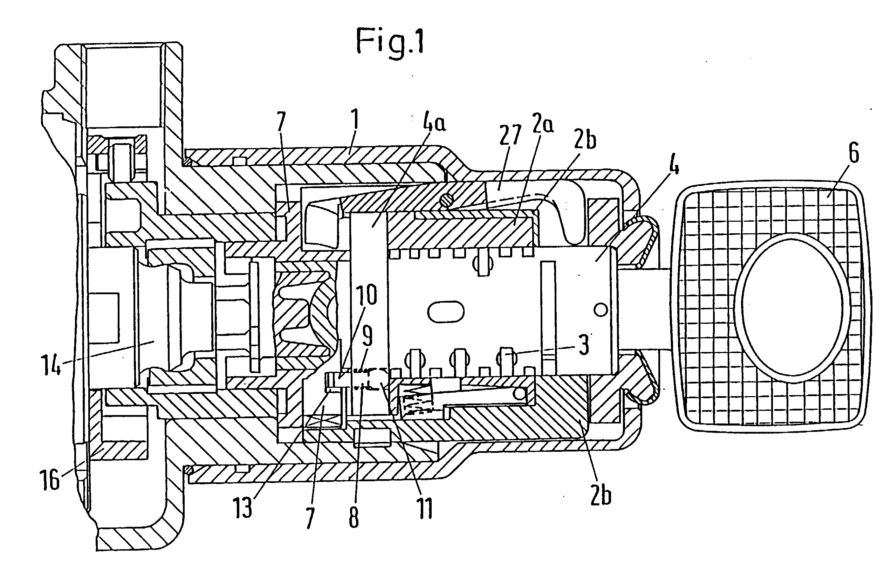

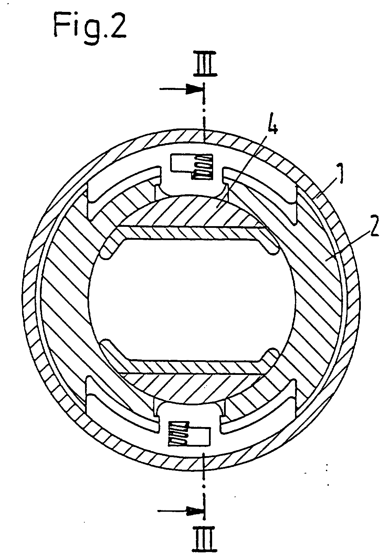

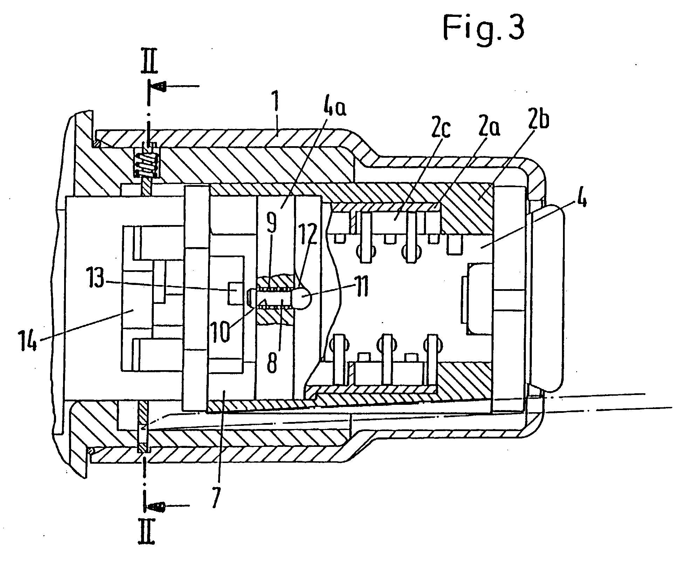

Im Ausführungsbeispiel nach den Fig. 1 bis 3 ist der Zylinderkern 4 koaxial in einem inneren Zylindergehäuse 2a gelagert, das von einem äußeren Zylindergehäuse 2b koaxial umgeben ist, so daß das Zylindergehäuse zweiteilig ausgeführt ist. Diese Zweiteilung hat keine Bedeutung für die Funktion, sondern wurde zur Erleichterung von Herstellung und Montage vorgenommen.

Im inneren Ende des Zylinderkerns 4 ist ein achsparalleler Stift 8 als Kuppelelement gelagert, der in einer achsparallelen Bohrung 10 des Zylinderkerns 4 einliegt und dort von einer Feder 9 umgeben ist, die den Stift zur Schlüsseleinführungsseite hin beaufschlagt. Hierbei bildet das innere Ende des Zylinderkerns 4 einen Ringbund 4a, der seitlich vorsteht und aus dem der Stift 8 mit einem Kopf 11 vorragt, der in einer Ausnehmung 12 des inneren Zylindergehäuses 2a einliegt. Hierbei bildet die Ausnehmung 12 eine Schrägfläche, so daß bei einer Drehbewegung des Zylinderkerns 4 gegenüber dem inneren Zylindergehäuse 2a der Kopf 11 auf der Schrägfläche hochläuft und damit das dem Kopf 11 entgegengesetzte Ende des Stiftes 8 aus dem Ringbund 4a soweit heraustritt, daß dieses Ende in eine Ausnehmung 13 des Übertragungsteils 7 einfährt. Hierdurch wird der Zylinderkern 4 an das Übertragungsteil 7 angekuppelt, so daß mit Verdrehen des Schlüssels nicht nur der Zylinderkern 4, sondern auch das Übertragungsteil 7 und die hinter dem Übertragungsteil 7 liegenden Teile insbesondere den Steuernocken 14 verdreht, der mit seiner Steuernockenwelle einen Sperriegelschieber 16 querverschiebt, der entweder selber den Sperriegel bildet oder mit dem Sperriegel verbunden ist, der in einer Ausnehmung der Längsspindel einfährt, um die Lenkung zu blockieren.

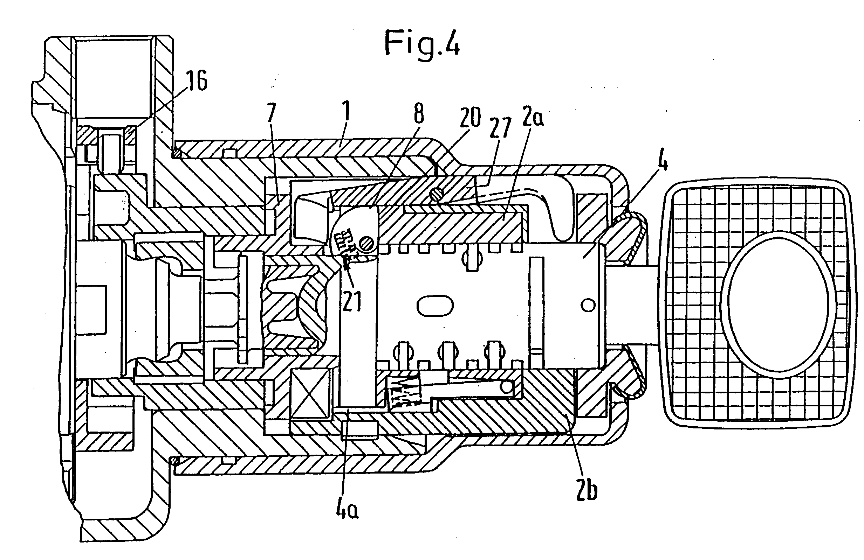

Statt eines achsparallelen Stiftes 8 kann auch außermittig am Zylinderkern 4 bzw. am Ringbund 4a des Zylinderkerns ein Schwenkteil 8 (Fig. 4) als Kuppelelement drehbeweglich gelagert sein. Die Drehachse dieses Schwenkteils 8 liegt etwa tangential zur Außenseite des Zylinderkerns 4.

Das Schwenkteil 8 hat die Form eines Kreissegmentes und liegt miteiner etwa radialen Seitenkante an einer inneren Stirnseite des Zylindergehäuses 2 an. Wird der Zylinderkern 4 gegenüber dem Zylindergehäuse 2 bei richtigem Schlüssel verdreht, so läuft die Kante 20 auf einer Kurve der Stirnseite des Zylindergehäuses entlang, wobei das Schwenkteil 8 verdreht wird, so daß die gegenüberliegende etwa radiale Kante 21 des Schwenkteils 8 in eine Ausnehmung des Übertragungsteils 7 eindringt, so daß der Zylinderkern das Übertragungsteil 7 mitverdreht, um über Zwischenteile den Sperriegel zu betätigen.

## Patentansprüche

1. Schließzylinder insbesondere eines KFZ-Schlosses mit einem Zylinderkern (4) mit Schlüsselkanal und Zuhaltungen (3), die bei falschem Schlüssel (6) in dem Zylindergehäuse (2), das der Zylinderkern (4) umgibt, sperrend einliegen und das Zylindergehäuse (2) eine Rast überwindend mitdrehend, und die bei richtigem Schlüssel den Zylinderkern (4) frei gegenüber dem Zylindergehäuse (2) drehen lassen, wobei durch die freie Drehung des Zylinderkerns (4) gegenüber dem Zylindergehäuse (2) der Zylinderkern (4) ein Kuppelelement mitnimmt, das auf einer Schrägfläche des Zylindergehäuses (2) aufläuft und damit eine Bewegung ausführt, die das Kuppelelement an ein Übertragungsteil (7) ankuppeln läßt, das eine Schließfunktion direkt oder indirekt ausführt, **dadurch gekennzeichnet**, daß das Kuppelelement am Zylinderkern (4) außermittig gelagert ist, und am Kuppelelement ein Federelement (9) anliegt, das das Kuppelelement (8) gegen seine Kuppelbewegung beaufschlagt.

2. Schließzylinder nach Anspruch 1, **dadurch gekennzeichnet**, daß das Kuppelelement (8) ein achsparalleler Stift ist, der axial bewegbar ist (Fig. 1 bis 3).

3. Schließzylinder nach Anspruch 1, **dadurch gekennzeichnet,** daß das Kuppelelement (8) ein Schwenkteil ist, das um eine zum Zylinderkern (4) tangentiale oder zur Tangente parallele Achse beweglich ist (Fig. 4).

4. Schließzylinder nach Anspruch 3, **dadurch gekennzeichnet**, daß das Schwenkteil etwa kreissegmentförmig ist und zum Ankuppeln sich mit einer Seitenkante zur Schließachse hin bewegt.

5. Schließzylinder nach einem der vorherigen Ansprüche, **dadurch gekennzeichnet**, daß das Kuppelelement mit einem äußeren Vorsprung auf einer seitlichen kurzen Umfangsbahn läuft.

6. Schließzylinder nach einem der vorherigen Ansprüche, **dadurch gekennzeichnet,** daß die Schrägfläche des Zylindergehäuses (2) nur in Schließdrehrichtung angeordnet ist und in entgegengesetzter Drehrichtung des Zylinderkerns (4) das Kuppelelement (2) gegen eine Sperrfläche anliegt.

7. Schließzylinder nach einem der vorherigen Ansprüche, **dadurch gekennzeichnet,** daß im Steuernocken (14) eine Sicherungsplatte querbeweglich gelagert ist, die den Steuernocken (14) diebstahlsicher am Zylinderkern (4) befestigt.

## Claims

1. Lock cylinder, especially for a lock for a motor vehicle, with a cylinder plug (4), with a key channel and tumblers (3), which, in the event of the wrong key (6) being inserted in the cylinder housing (2) which surrounds the cylinder plug (4), engage with the key in such a manner as to block it, the cylinder housing (2) then rotating in sympathy, overcoming a dog catch, and which, in the event of the correct key being inserted, causes the cylinder plug (4) to rotate freely in relation to the cylinder housing (2), as a result of which, due to the free rotation of the cylinder plug (4) in relation to the cylinder housing (2), the cylinder plug (4) carries a coupling element with it, which runs on an oblique surface of the cylinder housing (2), and so carries out a movement which allows the coupling element to couple to a transitional element (7), which carries out a locking function directly or indirectly, characterised in that the coupling element is mounted eccentrically on the cylinder plug (4), and that a spring element (9) is located at the coupling element, which imposes pressure on the coupling element (8) against its coupling movement.

2. Lock cylinder according to Claim 1, characterised in that the coupling element (8) is an axial parallel pin, which is capable of being moved axially (Figs. 1 to 3).

3. Lock cylinder according to Claim 1, characterised in that the coupling element (8) is a pivoting element, which is capable of movement about an axis which is tangential to the cylinder plug (4) or parallel to the tangent (Fig. 4).

4. Lock cylinder according to Claim 3, characterised in that the pivoting element is approximately the shape of a circular segment, and, in order to effect the coupling, moves away with one lateral edge to the locking axis.

5. Lock cylinder according to one or more of the preceding Claims, characterised in that the coupling element, with an external projection, runs on a short lateral circumferential track.

6. Lock cylinder according to one or more of the preceding Claims, characterised in that the oblique surface of the cylinder housing (2) is arranged only in the direction of rotation for locking, and in the opposite direction of rotation of the cylinder plug (4) the coupling element (2) comes in contact against a blocking surface.

7. Lock cylinder according to one of the preceding Claims, characterised in that a security plate is mounted in the controlling cam (14), such as to be capable of oblique movement, which then secures the controlling cam (14) to the cylinder plug (4), secure against theft.

## Revendications

1. Cylindre de fermeture en particulier de serrure de véhicule automobile, comportant un noyau de cylindre (4) ayant un chemin de clé et des gâchettes (3) qui, en cas de fausse clé (6), se trouvent, bloquantes, dans le corps de cylindre (2) qui entoure le noyau du cylindre (4) et entraînent en rotation le corps de cylindre (2) en vainquant un élément d'arrêt, et, en cas de bonne clé, laissent tourner librement le noyau du cylindre (4) par rapport au corps de cylindre (2), et par la libre rotation du noyau du cylindre (4) par rapport au corps de cylindre (2), le noyau du cylindre (4) entraîne un élément d'accouplement qui monte sur une surface inclinée du corps de cylindre (2) et exécute ainsi un mouvement qui fait s'accoupler l'élément d'accouplement à une pièce de transmission (7) qui accomplit directement ou indirectement une fonction de fermeture, caractérisé par le fait que l'élément d'accouplement est monté excentriquement sur le noyau du cylindre (4), et par le fait que sur l'élément d'accouplement s'appuie un élément élastique (9) qui agit sur l'élément d'accouplement (8) en s'opposant à son mouvement d'accouplement.

2. Cylindre de fermeture selon la revendication 1, caractérisé par le fait que l'élément d'accouplement (8) est une broche parallèle à l'axe qui est mobile axialement (fig. 1 à 3).

3. Cylindre de fermeture selon la revendication 1, caractérisé par le fait que l'élément d'accouplement (8) est une pièce tournante qui est mobile autour d'un axe tangent au noyau du cylindre (4) ou parallèle à la tangente (fig. 4).

4. Cylindre de fermeture selon la revendication 3, caractérisé par le fait que la pièce tournante est à peu près en forme de segment de cercle et, pour l'accouplement, possède un bord latéral qui se meut vers l'axe de fermeture.

5. Cylindre de fermeture selon l'une des revendications précédentes, caractérisé par le fait que l'élément d'accouplement a une saillie extérieure qui évolue sur un chemin circonférentiel latéral court.

6. Cylindre de fermeture selon l'une des revendications précédentes, caractérisé par le fait que la surface inclinée du corps de cylindre (2) est placée seulement dans le sens de rotation de fermeture, et que dans le sens de rotation opposé du noyau du cylindre (4), l'élément d'accouplement (2) s'appuie contre une surface d'arrêt.

7. Cylindre de fermeture selon l'une des revendications précédentes, caractérisé par le fait que dans la came de commande (14) est montée mobile transversalement une pl que d'arrêt qui fixe la came de commande (14) au noyau du cylindre (4) de manière à empêcher le vol.
